# EUROPEAN PATENT SPECIFICATION

(11) **EP 4 372 313 B1**
(45) Date of publication and mention of the grant of the patent: **09.09.2026**
(21) Application number: 23187722.6
(22) Date of filing: 26.07.2023
(51) Int. Cl.: G01C 21/32, G01C 21/34, G01C 21/00

(54) **3-DIMENSIONAL (3D) MAP GENERATION SYSTEM AND METHOD FOR CREATING 3D MAP OF SURROUNDINGS OF A VEHICLE**
3D-KARTENERZEUGUNGSSYSTEM UND VERFAHREN ZUR ERZEUGUNG EINER 3D-KARTE EINER UMGEBUNG EINES FAHRZEUGS
SYSTÈME DE GÉNÉRATION DE CARTE TRIDIMENSIONNELLE (3D) ET PROCÉDÉ DE CRÉATION DE CARTE 3D D'ENVIRONNEMENT D'UN VÉHICULE

(30) Priority: 15.11.2022 GB 202217005
(43) Date of publication of application: 22.05.2024
(73) Proprietor: AUMOVIO Autonomous Mobility Germany GmbH, 85057 Ingolstadt (DE)
(72) Inventor: Tanksale, Tejas, 339780 Singapore (SG)
(74) Representative: Aumovio Corporation

(56) References cited:
- US-B1- 10 491 885
- US-B1- 11 479 213

## Description

### TECHNICAL FIELD

The present subject matter is generally related to autonomous vehicles, and more particularly, but not exclusively, to a 3-Dimensional (3D) map generation system, method, and device for generating a 3D map of surroundings of a vehicle.

### BACKGROUND

In self-driving or autonomous vehicles, perception of environment during special conditions such as rain, fog, low-light situation, obstruction of camera setup due to foreign objects etc. becomes difficult. When these special conditions occur, the camera sensing might be affected, causing problems for creating a Three-Dimensional (3D) map of the environment with the help of a camera setup. To take care of such problems, the conventional approaches suggest accompanying the camera by a radar device. However, this requires higher processing power as both the camera and the radar devices run in parallel. Moreover, radar processing requires an additional computing device, which will increase the cost and add to the hardware complexity of the setup.

The information disclosed in this background of the disclosure section is for enhancement of understanding of the general background of the invention and should not be taken as an acknowledgement or any form of suggestion that this information forms the prior art already known to a person skilled in the art.

Document US 10,491,885 B1 discloses a scene modelling system comprising a camera system, an image processor and a lidar system. Post-processing in the lidar system is guided by camera information.

Document US 11,479,213 B1 discloses a system configured to detect an obstruction on sensor at least partially obstructing or distorting a portion of the field of view of the sensor. The system is further configured to mitigate the effects of the obstruction or at least partially remove the obstruction from the sensor.

### SUMMARY

Disclosed herein is a Three-Dimensional (3D) map generation system for generating 3D map of surroundings of a vehicle. The 3D map generation system comprises a processor, one or more cameras, one or more detectors and one or more sensing devices. The one or more cameras are configured for monitoring the surroundings of the vehicle. The one or more detectors are configured for detecting one or more special conditions of the surroundings. The one or more sensing devices are configured for monitoring the surroundings of the vehicle. The processor is configured to detect the one or more special conditions of the surroundings using the one or more detectors. The one or more special conditions comprise at least one from - occurrence of an adverse weather condition, a low light condition, a low visibility condition, or a physical obstruction to the one or more cameras. Further, the processor is configured to control each of the one or more cameras and the one or more sensing devices to operate alternately, upon detecting the one or more special conditions. Thereafter, the processor is configured to generate a 3D data representation of the surroundings based on image data captured by the one or more cameras. Furthermore, the processor is configured to generate a further 3D data representation of the surroundings based on sensor data captured by the one or more sensing devices. Thereafter, the processor is configured to detect one or more bad regions in the 3D data representation and replace the one or more bad regions in the 3D data representation with corresponding regions in the further 3D data representation, to result in a combined 3D map. The combined 3D map is generated using only the one or more cameras during normal conditions of the surroundings.

Further, the present disclosure relates to a computer-implemented method for creating 3-Dimensional (3D) map of surroundings of a vehicle. The method comprises controlling each of one or more cameras and one or more sensing devices to operate alternately, based on one or more detectors detecting one or more special conditions of the surroundings. The one or more special conditions comprise at least one from - occurrence of an adverse weather condition, a low light condition, a low visibility condition, or a physical obstruction to the one or more cameras. Further, the method comprises generating a 3D data representation of the surroundings based on image data captured by the one or more cameras. Thereafter, the method comprises generating a further 3D data representation of the surroundings based on sensor data captured by the one or more sensing devices. Furthermore, the method comprises detecting one or more bad regions in the 3D data representation. Finally, the method comprises replacing the one or more bad regions in the 3D data representation with corresponding regions in the further 3D data representation, to result in a combined 3D map. The combined 3D map is generated using only the one or more cameras during normal conditions of the surroundings.

Embodiments of the disclosure according to the above mentioned Three-Dimensional (3D) map generation system, method and device bring about several technical advantages.

The Three-Dimensional (3D) map generation system can additionally help in generating an accurate and clear 3D map of a surroundings of the vehicle even in the adverse weather conditions and/or malfunction of the one or more cameras.

The Three-Dimensional (3D) map generation system may ensure that the one or more sensing devices are activated only during the special conditions of the surroundings. That is, only the feed from the one or more cameras are used for generating the 3D map in normal conditions of the surroundings. This helps in optimal usage of the one or more sensing devices, reducing complexity/time of computation and preventing additional processing costs.

, The one or more cameras and the one or more sensing devices may be activated sequentially and/or alternately in a multiplexed time frame. This helps in reducing the processing time required for generating the 3D map of the surroundings. In an embodiment, the 3D map generation system according to the present disclosure dynamically detects and replaces the bad regions in the 3D data representation. This helps in generating accurate 3D map of the surroundings. The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The accompanying drawings, which are incorporated in and constitute a part of this disclosure, illustrate exemplary embodiments and together with the description, serve to explain the disclosed principles. In the figures, the left most digit(s) of a reference number identifies the figure in which the reference number first appears. The same numbers are used throughout the figures to reference like features and components. Some embodiments of 3D map generation system and/or methods in accordance with embodiments of the present subject matter are now described below, by way of example only, and with reference to the accompanying figures.
Figure 1A illustrates a block diagram of a 3D map generation system, in accordance with some embodiments of the present disclosure.
Figure 1B illustrates an exemplary flow of operations in a 3D map generation system, in accordance with some embodiments of the present disclosure.
Figure 2 shows a detailed block diagram of the 3D map generation system, in accordance with some embodiments of the present disclosure.
Figure 3 illustrates a flowchart showing a method for creating 3-Dimensional (3D) map of surroundings of a vehicle, in accordance with some embodiments of present disclosure.
Figures 4A and 4B illustrate time multiplexed alternate operations of the one or more cameras and the one or more sensing devices, in accordance with some embodiments of the present disclosure.

It should be appreciated by those skilled in the art that any block diagrams herein represent conceptual views of illustrative 3D map generation systems embodying the principles of the present subject matter. Similarly, it will be appreciated that any flowcharts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below.

The terms "comprises", "comprising", or any other variations thereof, are intended to cover a non exclusive inclusion, such that a setup, device or method that comprises a list of components or steps does not include only those components or steps but may include other components or steps not expressly listed or inherent to such setup or device or method. In other words, one or more elements in a Three-Dimensional (3D) map generation system or apparatus proceeded by "comprises... a" does not, without more constraints, preclude the existence of other elements or additional elements in the 3D map generation system or method.

In various contexts, 3D data representation may refer to any one of 3D point cloud, voxel data, meshes etc.

When any special conditions are detected in a surrounding environment of the vehicle, the 3D map generation system activates both the one or more sensing devices and the one or more cameras and controls/operates them alternately for generating a 3D map of the surroundings. At regular intervals, the one or more sensing devices are activated for processing, such that, at a particular time, the processing happens through either the one or more sensing devices or the one or more cameras. In case when the one or more sensing devices are activated, the one or more sensing devices take over as the primary Three-Dimensional (3D) map generator. The 3D map includes a 3D data representation. The 3D data representation is generated using the image data captured by the one or more cameras which is then validated by a software for bad regions. The 3D data representation may include point cloud, voxel data, meshes etc. The bad regions are eliminated and only those which have valid data are fused with the 3D map generated by the one or more sensing devices. The combined operation of the one or more cameras and the one or more sensing devices offers speed as well as accuracy for generating the 3D maps. Finally, when the surrounding conditions return to normal, the one or more sensing devices are stopped from processing and the 3D map is generated using only the one or more cameras.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

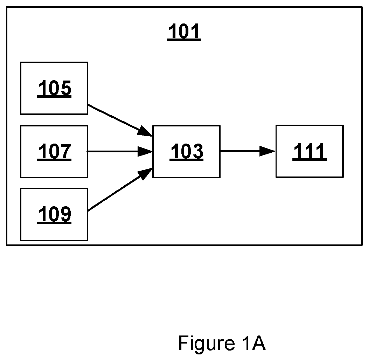

Figure 1A illustrates a block diagram of a 3D map generation system, in accordance with some embodiments of the present disclosure.

In an embodiment, a vehicle, may be configured with a Three-Dimensional (3D) map generation system 101 for creating 3D map 111 of surroundings of the vehicle. As an example, the vehicle may be a passenger vehicle such as a car, a van and/or a commercial vehicle such as pick-up trucks. The 3D map generation system 101 includes a processor 103, one or more cameras 105, one or more detectors 107 and one or more sensing devices 109. In an embodiment, the processor 103 may be, without limitation, an Electronic Control Unit (ECU) or any computing unit configured within the vehicle. In an embodiment, the 3D map generation system 101 may be a dedicated computing unit and/or an ECU dedicated for creating the 3D map 111 of the surroundings of the vehicle. Alternatively, an existing ECU of the vehicle may be upgraded to perform functionalities of the proposed 3D map generation system 101, in accordance with the embodiments of the present disclosure.

The one or more cameras 105 of the 3D map generation system 101 are configured to monitor the surroundings of the vehicle. In an embodiment, the one or more cameras 105 may be placed at different positions in the vehicle. As an example, the one or more cameras 105 may be placed, without limitation, on the front side of the vehicle, rear side of the vehicle or on the sides of the vehicle. The one or more detectors 107 are configured to detect one or more special conditions of the surroundings. As an example, the one or more detectors 107 may comprise, without limitation, a temperature sensor, a humidity sensor, a rain sensor and the like. The one or more special conditions includes at least one of occurrence of an adverse weather condition, a low light condition, a low visibility condition or a physical obstruction to the one or more cameras 105. As an example, the adverse weather condition may include, without limitation, rain, fog, sandstorm and the like.

The one or more sensing devices 109 of the 3D map generation system 101 are configured to monitor the surroundings of the vehicle. As an example, the one or more sensing devices 109 may include, without limitation, a Radio Detection and Ranging (RADAR), Light Detection and Ranging (LiDAR) and the like.

The 3D map generation system generates the 3D map 111 of the surroundings using only the one or more cameras 105 during the normal conditions of the surroundings. However, when the one or more detectors 107 detect one or more special conditions in the surroundings, the 3D map generation system 101 may control each of the one or more cameras 105 and the one or more sensing devices 109 to operate sequentially or alternately at a predefined alternative time interval. As an example, the predefined time interval may be 20 milliseconds (ms). In an embodiment, when both the cameras 105 and the sensing devices 109 are being operated, the one or more sensing devices 109 may be used as the primary 3D map generator.

According to various embodiments, for normal operations, the processor may use sensing devices 109 if it is suitable for the conditions. The processor may activate time multiplexed processing, in response to the one or more detectors 107 detecting abnormal conditions. The default settings may employ either cameras 105 or sensing devices 109.

During the one or more special conditions, the 3D map generation system 101 generates a 3D data representation of the surroundings based on image data captured by the one or more cameras 105 and also generates a further 3D data representation of the surroundings based on sensor data captured by the one or more sensing devices 109. In an embodiment, the 3D map generation system 101 uses a first pretrained Artificial Intelligence (AI) model to generate 3D data representation using Two-Dimensional (2D) images captured by the one or more cameras 105. As an example, the first pretrained AI model may comprise, without limitation, a Pyramid Stereo Matching Network (PSMNet) model, a DeepPruner model and the like. In an embodiment, the first pretrained AI model generates a disparity matrix/ disparity data, which is then converted to the corresponding 3D data representation. Further, the 3D data representation is rendered in a 3D space for obtaining the corresponding 3D map 111.

In an embodiment, after obtaining the further 3D data representation based on the sensor data captured by the one or more sensing devices 109, the 3D map generation system 101 may detect one or more bad regions in the 3D data representation generated using the image data of the one or more cameras 105 using a second predefined Artificial Intelligence (AI) model. As an example, the second predefined AI model may comprise, without limitation, convolutional neural network, YOLOv5, segmentation networks, and the like. Subsequently, upon detecting the one or more bad regions, the 3D map generation system 101 may replace the one or more bad regions in the 3D data representation with corresponding regions in the further 3D data representation, to result in a combined 3D map 111.

In an embodiment, the one or more cameras 105 and the one or more sensing devices 109 may be placed in such a way that both the cameras 105 and the sensing devices 109 cover at least substantially same field of view. When the one or more cameras 105 and the one or more sensing devices 109 have a different field of view, the 3D map generation system 101 uses a precalculated translation matrix to generate the 3D map 111 since the 3D data representation and the further 3D data representation are in different 3D coordinate spaces. In an embodiment, the 3D map 111 generated may be used by an autonomous driving system of the vehicle for autonomous driving of the vehicle.

In an embodiment, when the 3D map generation system 101 detects that the conditions of the surroundings are back to normal conditions, the 3D map generation system 101 stops or suspends operations of the one or more sensing devices 109 and uses only the one or more cameras 105 for generating the 3D data representation of the surroundings.

In an embodiment, the 3D map 111 may be also displayed to a user of the vehicle on a display / infotainment system of the vehicle, on a Heads-up Display (HUD) of the vehicle or on a vehicle application installed on a user device.

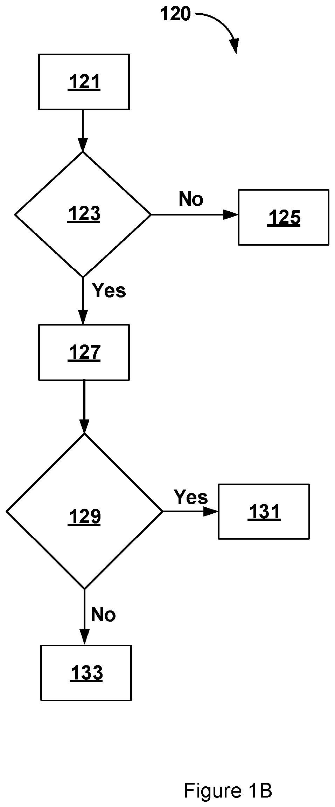

Figure 1B illustrates an exemplary flow of operations in a 3D map generation system, in accordance with some embodiments of the present disclosure.

In an embodiment, when a user of the vehicle turns ON the vehicle and/or the driver of the vehicle enables self-driving mode in the vehicle, the Three-Dimensional (3D) map generation system 101 monitors the surroundings using the one or more detectors 107 (step 121). In an embodiment, the one or more detectors 107 checks if one or more special conditions have occurred in the surroundings of the vehicle (step 123). When the one or more special conditions are not detected, the 3D map generation system 101 generates a 3D map 111 using a 3D data representation generated using the image data captured by the one or more cameras 105 (step 125). On the other hand, if the one or more special conditions are detected, the 3D map generation system 101 controls each of the one or more cameras 105 and the one or more sensing devices 109 to operate alternately. In an embodiment, the 3D data representation is generated using the image data captured by the one or more cameras 105 and the further 3D data representation is generated using the sensor data captured by the one or more sensing devices 109 (step 127).

In an embodiment, the 3D map 111 generation module checks if there are any bad regions in the 3D data representation (step 129). In an embodiment, if there are bad regions in the 3D data representation, the bad regions are replaced with the further 3D data representation (step 131). In an embodiment, if there are no bad regions, the 3D map 111 is generated using both the 3D data representation 127 and the further 3D data representation alternately (step 133).

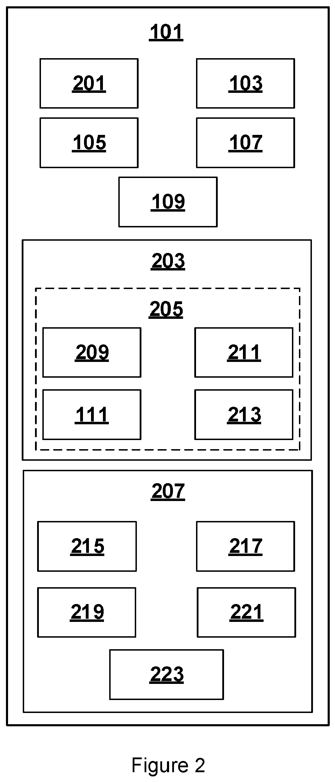

Figure 2 shows a detailed block diagram of a Three-Dimensional (3D) map generation system 101, in accordance with some embodiments of the present disclosure.

In an embodiment, the 3D map generation system 101 may include an I/O Interface 201 and a memory 203. The I/O interface 201 may be configured for receiving and transmitting an input signal or/and an output signal related to one or more operations of the Three-Dimensional (3D) map generation system 101. In an embodiment, the memory 203 may store data 205 and one or more modules 207 of the 3D map generation system 101. In an embodiment, the data 205 stored in the memory 203 may include, without limitation, 3D data representation 209, further 3D data representation 211, a 3D map 111 and other data 213. In some implementations, the data 205 may be stored within the memory 203 in the form of various data structures. Additionally, the data 205 may be organized using data models, such as relational or hierarchical data models. The other data 213 may include various temporary data and files generated by the different components of the 3D map generation system 101.

In an embodiment, the 3D data representation 209 is generated using two-Dimensional (2D) images captured by the one or more cameras 105. In an embodiment, the 3D map generation system 101 uses a first pretrained Artificial Intelligence (AI) model to generate 3D data representation 209 using the 2D images. As an example, the first pretrained AI model may comprise, without limitation, a PSMNet model, a DeepPruner model and the like. In an embodiment, the first pretrained AI model generates depth data, which is then used to generate a 3D data representation. Further, the 3D data representation may be translated into a corresponding a 3D space for generating the 3D map 111.

The further 3D data representation 211 is generated using sensor data captured by the one or more sensing devices 109. The further 3D data representation 211 is used to replace the bad regions in the 3D data representation 209. In an embodiment, during the one or more special conditions, a combination of the further 3D data representation 211 and the 3D data representation 209 are used to generate the 3D map 111.

In an embodiment, the 3D map 111 is map generated in a 3D space using the 3D data representation 209 and/or the further 3D data representation 211. In an embodiment, the 3D map 111 is generated using 3D data representation 209 in normal conditions. In an embodiment, the 3D map 111 is generated using both the 3D data representation 209 and the further 3D data representation 211 alternately, in the one or more special conditions. However, during the normal conditions, the 3D map 111 is generated using the 3D data representation 209 generated using the image data captured by the one or more cameras 105. In an embodiment, the 3D map 111 generated by the 3D map generation system 101 may be used in autonomous driving.

In an embodiment, the data 205 may be processed by the one or more modules 207 of the 3D map generation system 101. In some implementations, the one or more modules 207 may be communicatively coupled to the processor 103 for performing one or more functions of the 3D map generation system 101. In an implementation, the one or more modules 207 may include, without limiting to, a detecting module 215, a controlling module 217, a generating module 219, a bad region detection module 221 and other modules 223. In an embodiment, the other modules 223 may be used to perform various miscellaneous functionalities of the 3D map generation system 101. It will be appreciated that such one or more modules 207 may be represented as a single module or a combination of different modules.

In an embodiment, the detecting module 215 may be associated with the one or more detectors 107 and configured to detect the one or more special conditions in the surroundings of the vehicles using real-time input signals received from the one or more detectors 107. In an embodiment, the detecting module 215 compares one or more events identified by the one or more detectors 107 with one or more predefined events for detecting the special conditions corresponding to the one or more events.

In an embodiment, the controlling module 217 may be configured to control each of the one or more cameras 105 and the one or more sensing devices 109. Also, the controlling module 217 may be used to operate the one or more cameras 105 and the one or more sensing devices 109 alternately, upon detecting the one or more special conditions by the detecting module 215.

In an embodiment, the generating module 219 may be configured to generate a Three-Dimensional (3D) data representation of the surroundings based on image data captured by the one or more cameras 105. In an embodiment, the generating module 219 may be also configured to generate a further 3D data representation 211 of the surroundings based on sensor data captured by the one or more sensing devices 109. In an embodiment, the generating module 219 may be configured to generate a 3D map 111 using the 3D data representation 209 and the further 3D data representation 211.

In an embodiment, the bad region detection module 215 may comprise a second predefined Artificial Intelligence (AI) model to detect bad regions in the Three-Dimensional (3D) data representation. In an embodiment, the bad region detection module 221 may be also configured to replace the one or more bad regions in the 3D data representation 209 with corresponding regions in the further 3D data representation 211, to result in a combined 3D map 111.

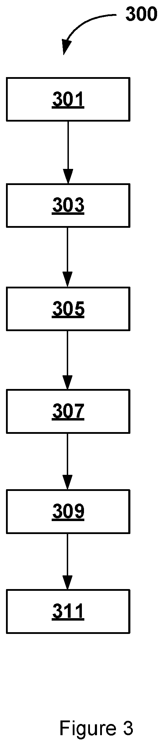

Figure 3 illustrates a flowchart showing a method for creating 3-Dimensional (3D) map of surroundings of a vehicle, in accordance with some embodiments of present disclosure

As illustrated in Figure 3, the method 300 includes one or more blocks for generating 3D map 111 of surroundings of a vehicle using a 3D map generation system 101 illustrated in Figure 2. The method 300 may be described in the general context of computer executable instructions. Generally, computer executable instructions can include routines, programs, objects, components, data structures, procedures, modules, and functions, which perform particular functions or implement particular abstract data types.

The order in which the method 300 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block 301, the method 300 includes detecting, by the Three-Dimensional (3D) map generation system 101, the one or more special conditions of the surroundings using the one or more detectors 107. In an embodiment, the one or more detectors 107 detect the one or more special conditions by monitoring the surroundings for detecting one or more events in the surroundings and comparing the one or more events with one or more predefined events for detecting the special conditions corresponding to the one or more events. The one or more special conditions may comprise at least one of occurrence of an adverse weather condition, a low light condition, a low visibility condition or a physical obstruction to the one or more cameras 105.

At block 303, the method 300 includes controlling, by the 3D map generation system 101, each of the one or more cameras 105 and the one or more sensing devices 109 to operate alternately, upon detecting the one or more special conditions. The 3D map 111 is generated using only the one or more cameras 105 during normal conditions of the surroundings.

At block 305, the method 300 includes generating, by the 3D map generation system 101, a Three-Dimensional (3D) data representation of the surroundings based on image data captured by the one or more cameras 105.

At block 307, the method 300 includes generating, by the 3D map generation system 101, a further Three-Dimensional (3D) data representation of the surroundings based on sensor data captured by the one or more sensing devices 109.

At block 309, the method 300 includes detecting, by the 3D map generation system 101, one or more bad regions in the 3D data representation 209.

At block 311, the method 300 includes replacing, by the 3D map generation system 101, the one or more bad regions in the 3D data representation 209 with corresponding regions in the further 3D data representation 211, to result in a combined 3D map 111. In an embodiment, the one or more cameras 105 and the one or more sensing devices 109 have at least substantially same field of view. In an embodiment, the 3D map generation system 101 uses a precalculated translation matrix to generate the 3D map 111 when the one or more cameras 105 and the one or more sensing devices 109 have different fields of view and when the 3D data representation 209 and the further 3D data representation 211 are in different 3D coordinate spaces.

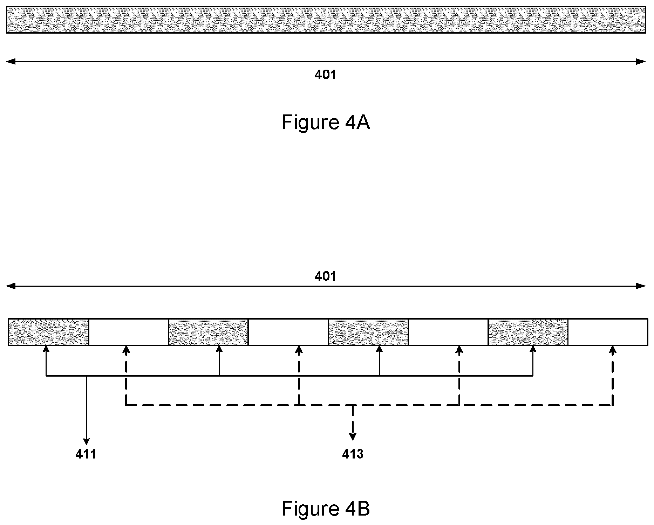

Figures 4A and 4B illustrate time multiplexed alternate operations of the one or more cameras and the one or more sensing devices, in accordance with some embodiments of the present disclosure.

In an embodiment, as illustrated in Figure 4A, during the normal conditions, the Three-Dimensional (3D) map generation system 101 generates a 3D map 111 using 3D data representation 209 generated using image data captured by the one or more cameras 105. That is, as shown in the time frame 401, the one or more cameras 105 are active during the entire time duration 401 and the 3D map 111 is generated using only the one or more cameras 105. As an example, the time duration 401 may be 1 Second.

In an embodiment, as illustrated in Figure 4B, during the one or more special conditions, the Three-Dimensional (3D) map generation system 101 generates a 3D map 111 using either the 3D data representation 209 obtained from the image data captured by the one or more cameras 105 or the further 3D data representation 211 obtained from the sensor data captured by the one or more sensing devices 109, which are sequentially and/or alternately activated in a multiplexed time frame. That is, both the one or more cameras 105 and the one or more sensing devices operate at predefined alternative time intervals. As an example, the predefined time interval may be 100 milliseconds. In an embodiment, as shown in Figure. 4B, the entire duration 401 may be split and shared among the one or more cameras 105 and the one or more sensing devices 109 for their alternate operation. In an embodiment, 411 indicates processing by the one or more sensing devices 109 and 413 indicates processing by the one or more camera devices.

In light of the technical advancements provided by the disclosed method and the 3D map generation system, the claimed steps, as discussed above, are not routine, conventional, or well-known aspects in the art, as the claimed steps provide the aforesaid solutions to the technical problems existing in the conventional technologies. Further, the claimed steps clearly bring an improvement in the functioning of the 3D map generation system itself, as the claimed steps provide a technical solution to a technical problem.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be clear that more than one device/article (whether they cooperate) may be used in place of a single device/article. Similarly, where more than one device/article is described herein (whether they cooperate), it will be clear that a single device/article may be used in place of the more than one device/article, or a different number of devices/articles may be used instead of the shown number of devices or programs. The functionality and/or features of a device may be alternatively embodied by one or more other devices which are not explicitly described as having such functionality/features. Thus, other embodiments of invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

### REFERRAL NUMERALS

| **Reference number** | **Description** |
|---|---|
| 101 | 3D map generation system |
| 103 | Processor |
| 105 | Cameras |
| 107 | Detectors |
| 109 | Sensing devices |
| 111 | 3D map |
| 201 | I/O interface |
| 203 | Memory |
| 205 | Data |
| 207 | Modules |
| 209 | 3D data representation |
| 211 | Further 3D data representation |
| 213 | Other data |
| 215 | Detecting module |
| 217 | Controlling module |
| 219 | Generating module |
| 221 | Bad region detecting module |
| 223 | Other modules |

## Claims

1. A 3-Dimensional (3D) map generation system (101) for generating 3D map (111) of surroundings of a vehicle, the system comprising:
a processor (103);
one or more cameras (105) for monitoring the surroundings of the vehicle;
one or more detectors (107) for detecting one or more special conditions of the surroundings, wherein the one or more special conditions comprises at least one of occurrence of an adverse weather condition, a low light condition, a low visibility condition or a physical obstruction to the one or more cameras (105); and
one or more sensing devices (109) for monitoring the surroundings of the vehicle;
wherein the processor (103) is configured to:
detect the one or more special conditions of the surroundings using the one or more detectors (107);
in response to detecting the one or more special conditions:
control each of the one or more cameras (105) and the one or more sensing devices (109) to operate alternately,
generate the Three-Dimensional (3D) data representation of the surroundings based on image data captured by the one or more cameras (105),
generate a further Three-Dimensional (3D) data representation of the surroundings based on sensor data captured by the one or more sensing devices (109), detect one or more bad regions in the 3D data
representation, and
replace the one or more bad regions in the 3D data representation with corresponding regions in the further 3D data representation, to result in a combined 3D map (111),
wherein the 3D map (111) is generated using only the one or more cameras (105) during normal conditions of the surroundings.

2. The 3D map generation system (101) of claim 1, wherein the one or more detectors (107) detect the one or more special conditions by:
monitoring the surroundings for detecting one or more events in the surroundings; and
comparing the one or more events with one or more predefined events for detecting the special conditions corresponding to the one or more events.

3. The 3D map generation system (101) of any of the preceding claims, wherein the one or more cameras (105) and the one or more sensing devices (109) have at least substantially same field of view.

4. The 3D map generation system (101) of any of the claims 1 to 3, wherein the processor (103) uses a precalculated translation matrix to generate the 3D map (111) when the one or more cameras (105) and the one or more sensing devices (109) have different fields of view and when the 3D data representation and the further 3D data representation are in different 3D coordinate spaces.

5. A computer-implemented method (300) for creating 3-Dimensional (3D) map (111) of surroundings of a vehicle, the method comprising:
detecting one or more special conditions of the surroundings using one or more detectors (107), wherein the one or more special conditions comprises at least one of occurrence of an adverse weather condition, a low light condition, a low visibility condition or a physical obstruction to the one or more cameras;
in response to detecting the one or more special conditions:
controlling each of one or more cameras (105) and one or more sensing devices (109) to operate alternately;
generating the Three-Dimensional (3D) data representation of the surroundings based on image data captured by the one or more cameras (105);
generating a further Three-Dimensional (3D) data representation of the surroundings based on sensor data captured by the one or more sensing devices (109);
detecting one or more bad regions in the 3D data representation; and
replacing the one or more bad regions in the 3D data representation with corresponding regions in the further 3D data representation, to result in a combined 3D map (111),
wherein the 3D map is generated using only the one or more cameras (105) during normal conditions of the surroundings.

6. The method (300) of claim 5, wherein detecting the one or more special conditions further comprises:
monitoring the surroundings for detecting one or more events in the surroundings; and
comparing the one or more events with one or more predefined events for detecting the special conditions corresponding to the one or more events.

7. The method (300) of claim 5 or 6, wherein the one or more cameras (105) and the one or more sensing devices (109) have at least substantially same field of view.

8. The method (300) of any of the claims 5 to 7, wherein a precalculated translation matrix is used to generate the 3D map when the one or more cameras (105) and the one or more sensing devices (109) have different fields of view and when the 3D data representation and the further 3D data representation are in different 3D coordinate spaces.

## Patentansprüche

1. Dreidimensionales (3D) Kartenerzeugungssystem (101) zum Erzeugen einer 3D-Karte (111) einer Umgebung eines Fahrzeugs, wobei das System umfasst:
einen Prozessor (103);
eine oder mehrere Kameras (105) zum Überwachen der Umgebung des Fahrzeugs;
einen oder mehrere Detektoren (107) zum Detektieren einer oder mehrerer Sonderbedingungen der Umgebung, wobei die eine oder die mehreren Sonderbedingungen mindestens eines von Auftreten einer widrigen Wetterbedingung, einer Schwachlichtbedingung, einer Schlechtsichtbedingung oder eines physischen Hindernisses für die eine oder die mehreren Kameras (105) umfasst; und
eine oder mehrere Sensorvorrichtungen (109) zum Überwachen der Umgebung des Fahrzeugs;
wobei der Prozessor (103) konfiguriert ist zum:
Detektieren der einen oder der mehreren Sonderbedingungen der Umgebung unter Verwendung des einen oder der mehreren Detektoren (107);
als Reaktion auf Detektieren der einen oder der mehreren Sonderbedingungen:
Steuern jeder der einen oder der mehreren Kameras (105) und der einen oder der mehreren Sensorvorrichtungen (109), um diese abwechselnd zu betreiben,
Erzeugen der dreidimensionalen (3D) Datendarstellung der Umgebung basierend auf Bilddaten, die durch die eine oder die mehreren Kameras (105) erfasst werden, Erzeugen einer weiteren dreidimensionalen (3D) Datendarstellung der Umgebung basierend auf Sensordaten, die durch die eine oder die mehreren Sensorvorrichtungen (109) erfasst werden, Detektieren eines oder mehrerer fehlerhafter Bereiche in der 3D-Datendarstellung, und
Ersetzen des einen oder der mehreren fehlerhaften Bereiche in der 3D-Datendarstellung durch korrespondierende Bereiche in der weiteren 3D-Datendarstellung, um eine kombinierte 3D-Karte (111) zu ergeben,
wobei die 3D-Karte (111) unter Verwendung nur der einen oder der mehreren Kameras (105) während Normalbedingungen der Umgebung erzeugt wird.

2. 3D-Kartenerzeugungssystem (101) nach Anspruch 1, wobei der eine oder die mehreren Detektoren (107) die eine oder die mehreren Sonderbedingungen detektieren durch:
Überwachen der Umgebung zum Detektieren eines oder mehrerer Ereignisse in der Umgebung; und
Vergleichen des einen oder der mehreren Ereignisse mit einem oder mehreren vordefinierten Ereignissen zum Detektieren der Sonderbedingungen, die dem einen oder den mehreren Ereignissen entsprechen.

3. 3D-Kartenerzeugungssystem (101) nach einem der vorhergehenden Ansprüche, wobei die eine oder die mehreren Kameras (105) und die eine oder die mehreren Sensorvorrichtungen (109) ein zumindest im Wesentlichen gleiches Sichtfeld aufweisen.

4. 3D-Kartenerzeugungssystem (101) nach einem der Ansprüche 1 bis 3, wobei der Prozessor (103) eine vorberechnete Translationsmatrix verwendet, um die 3D-Karte (111) zu erzeugen, wenn die eine oder die mehreren Kameras (105) und die eine oder die mehreren Sensorvorrichtungen (109) unterschiedliche Sichtfelder aufweisen und wenn die 3D-Datendarstellung und die weitere 3D-Datendarstellung in unterschiedlichen 3D-Koordinatenräumen sind.

5. Computerimplementiertes Verfahren (300) zum Erstellen einer dreidimensionalen (3D) Karte (111) einer Umgebung eines Fahrzeugs, wobei das Verfahren umfasst:
Detektieren einer oder mehrerer Sonderbedingungen der Umgebung unter Verwendung eines oder mehrerer Detektoren (107), wobei die eine oder die mehreren Sonderbedingungen mindestens eines von Auftreten einer widrigen Wetterbedingung, einer Schwachlichtbedingung, einer Schlechtsichtbedingung oder eines physischen Hindernisses für die eine oder die mehreren Kameras umfasst;
als Reaktion auf Detektieren der einen oder der mehreren Sonderbedingungen:
Steuern jeder der einen oder der mehreren Kameras (105) und einer oder mehrerer Sensorvorrichtungen (109), um diese abwechselnd zu betreiben;
Erzeugen der dreidimensionalen (3D) Datendarstellung der Umgebung basierend auf Bilddaten, die durch die eine oder die mehreren Kameras (105) erfasst werden;
Erzeugen einer weiteren dreidimensionalen (3D) Datendarstellung der Umgebung basierend auf Sensordaten, die durch die eine oder die mehreren Sensorvorrichtungen (109) erfasst werden;
Detektieren eines oder mehrerer fehlerhafter Bereiche in der 3D-Datendarstellung; und
Ersetzen des einen oder der mehreren fehlerhaften Bereiche in der 3D-Datendarstellung durch korrespondierende Bereiche in der weiteren 3D-Datendarstellung, um eine kombinierte 3D-Karte (111) zu ergeben,
wobei die 3D-Karte unter Verwendung nur der einen oder der mehreren Kameras (105) während Normalbedingungen der Umgebung erzeugt wird.

6. Verfahren (300) nach Anspruch 5, wobei Detektieren der einen oder der mehreren Sonderbedingungen ferner umfasst:
Überwachen der Umgebung zum Detektieren eines oder mehrerer Ereignisse in der Umgebung; und
Vergleichen des einen oder der mehreren Ereignisse mit einem oder mehreren vordefinierten Ereignissen zum Detektieren der Sonderbedingungen, die dem einen oder den mehreren Ereignissen entsprechen.

7. Verfahren (300) nach Anspruch 5 oder 6, wobei die eine oder die mehreren Kameras (105) und die eine oder die mehreren Sensorvorrichtungen (109) ein zumindest im Wesentlichen gleiches Sichtfeld aufweisen.

8. Verfahren (300) nach einem der Ansprüche 5 bis 7, wobei eine vorberechnete Translationsmatrix verwendet wird, um die 3D-Karte zu erzeugen, wenn die eine oder die mehreren Kameras (105) und die eine oder die mehreren Sensorvorrichtungen (109) unterschiedliche Sichtfelder aufweisen und wenn die 3D-Datendarstellung und die weitere 3D-Datendarstellung in unterschiedlichen 3D-Koordinatenräumen sind.

## Revendications

1. Système (101) de génération de carte tridimensionnelle (3D) pour la génération d'une carte 3D (111) d'environnement d'un véhicule, le système comprenant :
un processeur (103) ;
une ou plusieurs caméras (105) pour la surveillance de l'environnement du véhicule ;
un ou plusieurs détecteurs (107) pour détecter une ou plusieurs conditions particulières de l'environnement, dans lequel les une ou plusieurs conditions spéciales comprennent au moins l'une d'une occurrence d'une condition météorologique défavorable, une condition de faible luminosité, une condition de faible visibilité ou une obstruction physique aux une ou plusieurs caméras (105) ; et
un ou plusieurs dispositifs de détection (109) pour la surveillance de l'environnement du véhicule ;
**caractérisé en ce que** le processeur (103) est configuré pour :
détecter les une ou plusieurs conditions particulières de l'environnement à l'aide des un ou plusieurs détecteurs (107) ;
en réponse à la détection des une ou plusieurs conditions particulières :
commander chacune des une ou plusieurs caméras (105) et des une ou plusieurs dispositifs de détection (109) pour fonctionner en alternance,
générer la représentation de données tridimensionnelle (3D) de l'environnement sur la base des données d'image capturées par les une ou plusieurs caméras (105),
générer une représentation de données tridimensionnelle (3D) supplémentaire de l'environnement sur la base de données de capteur capturées par les un ou plusieurs dispositifs de détection (109), détecter une ou plusieurs régions défectueuses dans la représentation de données 3D, et
remplacer les une ou plusieurs régions défectueuses dans la représentation de données 3D par des régions correspondantes dans la représentation de données 3D supplémentaire, pour obtenir une carte 3D combinée (111),
dans lequel la carte 3D (111) est générée à l'aide seulement des une ou plusieurs caméras (105) dans des conditions normales de l'environnement.

2. Système de génération de carte 3D (101) de la revendication 1, dans lequel les un ou plusieurs détecteurs (107) détectent les une ou plusieurs conditions particulières par :
la surveillance de l'environnement pour la détection d'un ou plusieurs événements dans l'environnement ; et
la comparaison des un ou plusieurs événements avec un ou plusieurs événements prédéfinis pour détecter les conditions particulières correspondant aux un ou plusieurs événements.

3. Système de génération de carte 3D (101) selon l'une quelconque des revendications précédentes, dans lequel les une ou plusieurs caméras (105) et les un ou plusieurs dispositifs de détection (109) possèdent au moins sensiblement le même champ de vision.

4. Système de génération de carte 3D (101) selon l'une quelconque des revendications 1 à 3, dans lequel le processeur (103) utilise une matrice de translation précalculée pour générer la carte 3D (111) lorsque les une ou plusieurs caméras (105) et les un ou plusieurs dispositifs de détection (109) possèdent des champs de vision différents et lorsque la représentation de données 3D et la représentation de données 3D supplémentaire se trouvent dans des espaces de coordonnées 3D différents.

5. Procédé mis en œuvre par ordinateur (300) pour la création d'une carte (111) tridimensionnelle (3D) de l'environnement d'un véhicule, le procédé comprenant :
la détection d'une ou plusieurs conditions particulières de l'environnement à l'aide d'un ou plusieurs détecteurs (107), dans lequel les une ou plusieurs conditions spéciales comprennent au moins l'une d'une occurrence d'une condition météorologique défavorable, une condition de faible luminosité, une condition de faible visibilité ou une obstruction physique aux une ou plusieurs caméras ;
en réponse à la détection des une ou plusieurs conditions particulières :
le fait de commander chacune d'une ou plusieurs caméras (105) et d'un ou plusieurs dispositifs de détection (109) pour fonctionner en alternance ;
la génération de la représentation de données tridimensionnelle (3D) de l'environnement sur la base de données d'images capturées par les une ou plusieurs caméras (105) ;
la génération d'une représentation de données tridimensionnelle (3D) supplémentaire de l'environnement sur la base de données de capteur capturées par les un ou plusieurs dispositifs de détection (109) ;
la détection d'une ou plusieurs régions défectueuses dans la représentation de données 3D ; et
le remplacement des une ou plusieurs régions défectueuses dans la représentation de données 3D par des régions correspondantes dans la représentation de données 3D supplémentaire, pour obtenir une carte 3D combinée (111),
dans lequel la carte 3D est générée à l'aide seulement des une ou plusieurs caméras (105) dans des conditions normales de l'environnement.

6. Procédé (300) selon la revendication 5, dans lequel la détection des une ou plusieurs conditions particulières comprend en outre :
la surveillance de l'environnement pour la détection d'un ou plusieurs événements dans l'environnement ; et
la comparaison des un ou plusieurs événements avec un ou plusieurs événements prédéfinis pour la détection des conditions particulières correspondant aux un ou plusieurs événements.

7. Procédé (300) selon la revendication 5 ou 6, dans lequel les une ou plusieurs caméras (105) et les un ou plusieurs dispositifs de détection (109) possèdent au moins sensiblement le même champ de vision.

8. Procédé (300) selon l'une quelconque des revendications 5 à 7, dans lequel une matrice de translation précalculée est utilisée pour générer la carte 3D lorsque les une ou plusieurs caméras (105) et les un ou plusieurs dispositifs de détection (109) possèdent des champs de vision différents et lorsque la représentation de données 3D et la représentation de données 3D supplémentaire se trouvent dans des espaces de coordonnées 3D différents.
